# EUROPÄISCHE PATENTSCHRIFT

(11) **EP 4 409 164 B1**
(45) Veröffentlichungstag und Bekanntmachung des Hinweises auf die Patenterteilung: **13.08.2025**
(21) Anmeldenummer: 22793753.9
(22) Anmeldetag: 28.09.2022
(51) Int. Cl.: F16H 57/031, F16H 57/04

(54) **ANTRIEBSEINRICHTUNG FÜR EIN KRAFTFAHRZEUG MIT MEHRFUNKTIONS-ABSCHLUSSDECKEL**
DRIVE DEVICE FOR A MOTOR VEHICLE, SAID DRIVE DEVICE COMPRISING A MULTI-FUNCTIONAL CLOSURE COVER
DISPOSITIF D'ENTRAÎNEMENT POUR UN VÉHICULE AUTOMOBILE, LEDIT DISPOSITIF D'ENTRAÎNEMENT COMPRENANT UN COUVERCLE DE FERMETURE MULTIFONCTIONNEL

(30) Priorität: 29.09.2021 DE 102021125199
(43) Veröffentlichungstag der Anmeldung: 07.08.2024
(73) Patentinhaber: Audi AG, 85045 Ingolstadt (DE)
(72) Erfinder: SZÉKELY, Béla, 9012 Györ (HU)
(86) Internationale Anmeldenummer: PCT/EP2022/076995
(87) Internationale Veröffentlichungsnummer: WO 2023/052432

(56) Entgegenhaltungen:
- JP-A- 2019 011 824
- US-A1- 2017 284 510
- US-B2- 8 409 041

## Beschreibung

Die Erfindung betrifft eine Antriebseinrichtung für ein Kraftfahrzeug, mit einem Maschinengehäuse, in dem ein Schmiermittelverbraucher, ein Schmiermitteltank und eine Schmiermittelpumpe angeordnet sind, wobei die Schmiermittelpumpe saugseitig über einen Saugkanal an den Schmiermittelverbraucher und der Schmiermitteltank über einen Vorlaufkanal ein den Schmiermittelverbraucher strömungstechnisch angeschlossen ist.

Aus dem Stand der Technik ist beispielsweise die Druckschrift CN 210196418 U bekannt. Diese beschreibt ein Schmiermittelsystem für eine Getriebeeinrichtung.

Die Druckschrift US 8 409 041 B2 betrifft ein Hybridgetriebe, welches über ein Getriebegehäuse mit einer an einem Hauptgehäuseabschnitt befestigten Einlassabdeckung und einen mit dem Getriebegehäuse strömungstechnisch verbundenen und an diesem befestigten Hydraulikfluidbehälter verfügt. Das Getriebe verfügt weiterhin über eine Eingangswelle, mit einem Motor antriebstechnisch gekoppelt ist. An dem Gehäuse ist eine Pumpenabdeckung befestigt, die eine dazwischenliegende Pumpenausnehmung definiert. Eine Drehmomentübertragungsanordnung verfügt über ein Kolbengehäuseelement, welches koaxial zu und in Längsrichtung beabstandet von der Pumpenabdeckung vorliegt, um eine dazwischenliegende Einlasspassage zu definieren. Die Einlasspassage ist dazu ausgebildet, den Hydraulikfluidbehälter mit dem Getriebegehäuse zu verbinden und ist zumindest bereichsweise radial benachbart zu der Pumpenausnehmung ausgerichtet. Ein Dichtungselement ist zwischen der Pumpenabdeckung und dem Kolbengehäuseelement angeordnet und dazu ausgebildet dieses strömungstechnisch abzudichten.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere eine kostengünstige und schnelle Herstellung ermöglicht.

Dies wird erfindungsgemäß mit einer Antriebseinrichtung für ein Kraftfahrzeug mit den Merkmalen des Anspruchs 1 erreicht. Dabei ist vorgesehen, dass die Schmiermittelpumpe druckseitig über einen Druckkanal an den Schmiermitteltank strömungstechnisch angeschlossen ist, wobei der Saugkanal, der Drucckanal und der Vorlaufkanal jeweils unter Ausbildung einer Öffnung offen in einem Grundkörper des Maschinengehäuses ausgebildet und die Öffnungen mittels eines an dem Grundkörper befestigten Abschlussdeckels strömungstechnisch separat voneinander abgedeckt sind, wobei die Schmiermittelpumpe saugseitig parallel zu dem Saugkanal an einen weiteren Saugkanal und über diesen strömungstechnisch an den Schmiermittelverbraucher und/oder einen weiteren Schmiermittelverbraucher angeschlossen ist.

Vorteilhafte Ausgestaltungen mit zweckmäßigen Weiterbildungen der Erfindung sind in den abhängigen Ansprüchen angegeben.

Die Antriebseinrichtung dient einem Antreiben des Kraftfahrzeugs, insoweit also dem Bereitstellen eines auf das Antreiben des Kraftfahrzeugs gerichteten Antriebsdrehmoments. Die Antriebseinrichtung verfügt hierzu vorzugsweise über ein Antriebsaggregat, welches zumindest zeitweise mit wenigstens einem Rad des Kraftfahrzeugs antriebstechnisch gekoppelt ist. Das Antriebsaggregat ist vorzugsweise zumindest teilweise in dem Maschinengehäuse angeordnet beziehungsweise von dem Maschinengehäuse aufgenommen. Beispielsweise liegt das Antriebsaggregat in Form einer elektrischen Maschine vor, die zumindest zeitweise als Elektromotor betrieben wird.

In dem Maschinengehäuse sind der Schmiermittelverbraucher, der Schmiermitteltank und die Schmiermittelpumpe angeordnet. Beispielsweise liegt der Schmiermittelverbraucher in Form des Antriebsaggregats und/oder eines Getriebes vor. Während eines Betriebs der Antriebseinrichtung wird dem Schmiermittelverbraucher zumindest zeitweise Schmiermittel zugeführt. Das Schmiermittel dient einem Schmieren und/oder einem Temperieren des Schmiermittelverbrauchers. Unter dem Begriff "Schmiermittelverbraucher" ist nicht zu verstehen, dass der Schmiermittelverbraucher das Schmiermittel tatsächlich verbraucht. Vielmehr nimmt der Schmiermittelverbraucher das Schmiermittel entgegen, insbesondere an einem Schmiermitteleinlass, und stellt es nachfolgend, zumindest größtenteils, wieder bereit, vorzugsweise an einem Schmiermittelauslass.

Das dem Schmiermittelverbraucher zugeführte Schmiermittel wird dem Schmiermitteltank entnommen, welcher insoweit zum Zwischenspeichern des Schmiermittel vorgesehen und ausgestaltet ist. Das Schmiermittel wird nach seinem Zuführen zu dem Schmiermittelverbraucher wieder dem Schmiermitteltank zugeführt, nämlich mithilfe der Schmiermittelpumpe. Das bedeutet, dass die Schmiermittelpumpe zum Fördern des von dem Schmiermittelverbraucher bereitgestellten Schmiermittel in Richtung des Schmiermitteltanks beziehungsweise in diesen hinein vorgesehen und ausgestaltet ist.

Vorzugsweise liegt wenigstens eine weitere Schmiermittelpumpe vor, mittels welcher das Schmiermittel aus dem Schmiermitteltank entnommen und in Richtung des Schmiermittelverbrauchers gefördert wird beziehungsweise dem Schmiermittelverbraucher zugeführt wird. Beispielsweise sind in diesem Fall die Schmiermittelpumpe und die weitere Schmiermittelpumpe unabhängig voneinander betreibbar, sodass mittels der Schmiermittelpumpe das Schmiermittel dem Schmiermitteltank zugeführt und mithilfe der weiteren Schmiermittelpumpe aus den Schmiermitteltank entnommen und in Richtung des Verbrauchers gefördert werden kann. Bevorzugt werden die Schmiermittelpumpe und die weitere Schmiermittelpumpe jedoch gemeinsam betrieben. Insbesondere werden sie von einem gemeinsamen Antrieb angetrieben.

Die Schmiermittelpumpe ist einerseits über den Saugkanal an den Schmiermittelverbraucher angeschlossen. Das bedeutet, dass die Schmiermittelpumpe über den Saugkanal das Schmiermittel von dem Schmiermittelverbraucher beziehungsweise dessen Schmiermittelauslass in Richtung des Schmiermitteltanks fördert. Andererseits ist die Schmiermittelpumpe über den Drucckanal an den Schmiermitteltank angebunden. Über den Saugkanal saugt die Schmiermittelpumpe insoweit das Schmiermittel aus Richtung des Schmiermittelverbrauchers an und fördert es über den Druckkanal in Richtung des Schmiermitteltanks beziehungsweise in diesen hinein.

Sowohl der Saugkanal als auch der Druckkanal sind bevorzugt unmittelbar an die Schmiermittelpumpe angeschlossen, erstrecken sich also in Strömungsrichtung ausgehend von dieser. Ebenso kann es vorgesehen sein, dass sich der Saugkanal bis an den Schmiermittelauslass des Schmiermittelverbrauchers und der Druckkanal bis hin zu dem Schmiermitteltank erstreckt. Vorzugsweise ist jedoch der Saugkanal von dem Schmiermittelauslass und der Druckkanal von dem Schmiermitteltank beabstandet angeordnet, sodass sie sich lediglich teilweise bis hin zu dem jeweiligen Element erstrecken.

Der Schmiermitteltank und der Schmiermittelverbraucher sind über den Vorlaufkanal strömungstechnisch aneinander angeschlossen. Entlang einer strömungstechnischen Verbindung zwischen dem Schmiermitteltank und dem Schmiermittelverbraucher liegt also der Vorlaufkanal vor. Es kann vorgesehen sein, dass der Vorlaufkanal unmittelbar von dem Schmiermitteltank ausgeht und sich bis hin zu dem Schmiermittelverbraucher erstreckt. Es kann jedoch vorgesehen sein, dass der Vorlaufkanal entweder von dem Schmiermitteltank oder dem Schmiermittelverbraucher oder von beiden strömungstechnisch beabstandet ist, also lediglich einen Teil der Strömungsverbindung mit ausbildet.

Der Saugkanal, der Druckkanal und der Vorlaufkanal sind jeweils zumindest bereichsweise in dem Maschinengehäuse ausgebildet. Für jeden der Kanäle liegt in dem Maschinengehäuse also eine korrespondierende Ausnehmung vor, die über die jeweilige Öffnung offen ist. Die Öffnung stellt insoweit eine Mündungsöffnung dar, über welche der jeweilige Kanal beziehungsweise die jeweilige Ausnehmung zunächst in eine Außenumgebung des Grundkörpers einmündet, nämlich solange der Abschlussdeckel nicht an dem Grundkörper befestigt ist, also bei nicht an dem Grundkörper befestigtem Abschlussdeckel. In anderen Worten sind die Ausnehmungen in Richtung des Abschlussdeckels offen und weisen dort ihre jeweilige Öffnung auf. Die Ausnehmungen in dem Maschinengehäuse, also der Saugkanal, der Druckkanal und der Vorlaufkanal, werden bevorzugt während eines Gießvorgangs des Maschinengehäuses hergestellt. Das Maschinengehäuse liegt in diesem Fall als Gussteil vor.

Es kann vorgesehen sein, dass die Ausnehmungen lediglich einen Teil der Kanäle bilden. Beispielsweise mündet ein Abschnitt des jeweiligen Kanals in die entsprechende Ausnehmung des Maschinengehäuses ein. Es kann insbesondere vorgesehen sein, dass ein erster Abschnitt eines der Kanäle an einer ersten Stelle in die Ausnehmung einmündet und ein zweiter Abschnitt an einer von der ersten Stelle beabstandeten zweiten Stelle von der Ausnehmung ausgeht, sodass die beiden Abschnitte über die Ausnehmung strömungstechnisch aneinander angebunden sind beziehungsweise in Strömungsverbindung miteinander stehen. Der Abschnitt beziehungsweise wenigstens einer der Abschnitte des jeweiligen Kanals wird bevorzugt ebenfalls während des Gießens ausgebildet oder ist alternativ als Bohrung ausgestaltet.

Wie bereits erläutert liegen die Kanäle beziehungsweise die Ausnehmungen zunächst offen in dem Maschinengehäuse vor. Aus diesem Grund wird der Abschlussdeckel an dem Grundkörper befestigt, nämlich derart, dass die Öffnungen vollständig übergriffen und somit abgedeckt beziehungsweise dicht verschlossen sind. Mittels des Abschlussdeckels werden die Kanäle also strömungstechnisch separat voneinander abgedeckt. Hierunter ist insbesondere zu verstehen, dass die Kanäle über ihre Öffnungen nicht in Strömungsverbindung miteinander stehen, sondern das eine solche Strömungsverbindung von dem Abschlussdeckel unterbrochen ist.

Der Abschlussdeckel dient einem gemeinsamen Abdecken beziehungsweise Verschließen der Öffnungen, sodass also zum Vervollständigen der Kanäle lediglich ein einziges Element, nämlich der Abschlussdeckel, an dem Grundkörper befestigt werden muss. Es ist mithin nicht notwendig, unterschiedliche Verschlusselemente separat an dem Maschinengehäuse anzubringen und/oder zu befestigen. Dies ermöglicht eine besonders rasche Herstellung der Antriebseinrichtung und bedeutet auch eine deutliche Vereinfachung der Montage der Antriebseinrichtung.

Besonders bevorzugt ist der Abschlussdeckel mit dem Maschinengehäuse verschraubt, also mittels wenigstens einer Schraube oder eines Bolzens an diesem befestigt. Hierdurch wird ein zuverlässiges und dauerhaft dichtes Abdecken beziehungsweise Verschließen der Öffnungen mithilfe des Abschlussdeckels realisiert. Insgesamt ist es für die beschriebene Antriebseinrichtung ohne weiteres möglich, die Kanäle zunächst auf besonders einfache Art und Weise in dem Maschinengehäuse zumindest teilweise auszubilden, insbesondere während eines Gießvorgangs, bei welchem das Maschinengehäuse hergestellt wird.

Nachfolgend wird der Abschlussdeckel zum gemeinsamen Abdecken beziehungsweise Verschließen der Öffnungen der Kanäle beziehungsweise der Ausnehmungen an dem Grundkörper angeordnet und an ihm befestigt. Durch die Anordnung des Abschlussdeckels werden insoweit die mehreren Kanäle gleichzeitig realisiert beziehungsweise vervollständigt. Der Abschlussdeckel begrenzt die Kanäle also jeweils zumindest bereichsweise beziehungsweise stellt ein strömungsführendes Element für die Kanäle dar.

Die Erfindung sieht vor, dass die Schmiermittelpumpe saugseitig parallel zu dem Saugkanal an einen weiteren Saugkanal und über diesen strömungstechnisch an den Schmiermittelverbraucher und/oder einen weiteren Schmiermittelverbraucher angeschlossen ist. Zusätzlich zu dem Saugkanal weist die Antriebseinrichtung also den weiteren Saugkanal auf. Über den weiteren Saugkanal ist die Schmiermittelpumpe strömungstechnisch ebenso an den Schmiermittelverbraucher angebunden wie über den Saugkanal. Zusätzlich oder alternativ ist über den weiteren Saugkanal eine Strömungsverbindung zwischen der Schmiermittelpumpe und dem weiteren Schmiermittelverbraucher hergestellt.

Beispielsweise stellt das Antriebsaggregat den Schmiermittelverbraucher und das Getriebe den weiteren Schmiermittelverbraucher oder umgekehrt dar. Über die Saugkanäle, also den Saugkanal und den weiteren Saugkanal, wird Schmiermittel von dem Schmiermittelverbraucher oder den Schmiermittelverbrauchern in Richtung des Schmiermitteltanks, insbesondere bis in den Schmiermitteltank, gefördert. Der weitere Saugkanal ist analog zu dem Saugkanal ausgestaltet. Das bedeutet, dass der weitere Saugkanal unter Ausbildung einer Öffnung offen in dem Grundkörper des Maschinengehäuses ausgebildet ist. Die Öffnung ist mittels des Abschlussdeckels abgedeckt beziehungsweise verschlossen, wobei dieses Abdecken beziehungsweise Verschließen für die Öffnung des weiteren Saugkanal und die Öffnungen des Saugkanal, des Druckkanals und des Vorlaufkanals strömungstechnisch separat voneinander erfolgt. Durch eine solche Ausgestaltung der Antriebseinrichtung und insbesondere des Maschinengehäuses wird ein hoher Integrationsgrad geschaffen und gleichzeitig eine rasche Montage sichergestellt. Dies führt zu einer kostengünstigen Herstellung der Antriebseinrichtung.

Eine Weiterbildung der Erfindung sieht vor, dass der Schmiermittelverbraucher und/oder der weitere Schmiermittelverbraucher jeweils als eine der nachfolgenden Einrichtungen vorliegen: Antriebsaggregat und Getriebe. Die Antriebseinrichtung weist - wie bereits erläutert - bevorzugt das Antriebsaggregat auf. Zusätzlich oder alternativ zu dem Antriebsaggregat verfügt die Antriebseinrichtung über das Getriebe. Das Getriebe weist wenigstens eine Getriebestufe auf, bevorzugt mehrere hintereinander geschaltete Getriebestufen. Über die Getriebestufe oder die Getriebestufen ist eine Getriebeeingangswelle antriebstechnisch an eine Getriebeausgangswelle angebunden. Vorzugsweise wird mittels der Getriebestufe beziehungsweise der Getriebestufen ein festes Übersetzungsverhältnis zwischen der Eingangswelle und der Ausgangswelle eingestellt. Die Getriebeeingangswelle ist bevorzugt an das Antriebsaggregat angeschlossen, insbesondere starr und/oder permanent. Die Getriebeausgangswelle ist hingegen mit dem mindestens einen Rad des Kraftfahrzeugs gekoppelt oder zumindest koppelbar. Beispielsweise verfügt die Antriebseinrichtung über eine Schaltkupplung. Diese kann beispielsweise zwischen der Getriebeausgangswelle und dem wenigstens einen Rad des Kraftfahrzeugs antriebstechnisch angeordnet sein.

Sowohl das Antriebsaggregat als auch das Getriebe müssen während ihres Betriebs mit Schmiermittel versorgt werden, zum einen zur Schmierung und zum anderen zur Temperierung. Insoweit liegt beispielsweise das Antriebsaggregat als der Schmiermittelverbraucher und das Getriebe als der weitere Schmiermittelverbraucher vor. Hierunter ist zu verstehen, dass dem Antriebsaggregat und/oder dem Getriebe während des Betriebs der Antriebseinrichtung aus dem Schmiermitteltank entnommenes Schmiermittel zugeführt wird, welches nachfolgend mithilfe der Schmiermittelpumpe über den Saugkanal von dem Antriebsaggregat und/oder dem Getriebe abgeführt und erneut in Richtung des Schmiermitteltanks gefördert wird. Eine solche Ausgestaltung bedingt eine Vielzahl von Kanälen in dem Maschinengehäuse, welche durch die Verwendung des Abschlussdeckels besonders einfach und kostengünstig herzustellen sind.

Eine Weiterbildung der Erfindung sieht vor, dass der Saugkanal über einen Schmiermittelsumpf an den Schmiermittelverbraucher und/oder der weitere Saugkanal über den Schmiermittelsumpf an den weiteren Schmiermittelverbraucher strömungstechnisch angeschlossen ist. Der Schmiermittelsumpf liegt insoweit strömungstechnisch zwischen dem Schmiermittelverbraucher und dem Saugkanal beziehungsweise zwischen dem weiteren Schmiermittelverbraucher und dem weiteren Saugkanal vor. Aus dem Schmiermittelverbraucher beziehungsweise dem weiteren Schmiermittelverbraucher austretendes Schmiermittel gelangt insoweit zunächst in den Schmiermittelsumpf und wird aus diesem mithilfe des Saugkanals und/oder des weiteren Saugkanals abgeführt, nämlich in Richtung des Schmiermitteltanks.

Beispielsweise sind der Schmiermittelverbraucher und der weitere Schmiermittelverbraucher beziehungsweise ihre Schmiermittelauslässe an denselben Schmiermittelsumpf strömungstechnisch angebunden. Es kann jedoch auch vorgesehen sein, dass der Saugkanal über den Schmiermittelsumpf an den Schmiermittelverbraucher und der weitere Saugkanal über einen weiteren Schmiermittelsumpf an den weiteren Schmiermittelverbraucher strömungstechnisch angeschlossen ist, wobei der Schmiermittelsumpf und der Schmiermittelsumpf strömungstechnisch voneinander getrennt sind beziehungsweise nur über die Kanäle, den Schmiermitteltank, die Schmiermittelpumpe und die Schmiermittelverbraucher miteinander verbunden sind. Hierdurch wird eine unmittelbare Anbindung des Saugkanals an den Schmiermittelverbraucher beziehungsweise des weiteren Saugkanals an den weiteren Schmiermittelverbraucher vermieden. Gleichzeitig wird ein zuverlässiges Fördern des Schmiermittels von den Schmiermittelverbrauchern in Richtung des Schmiermitteltanks sichergestellt.

Eine Weiterbildung der Erfindung sieht vor, dass der Abschlussdeckel zum Abdecken der Öffnungen an die Öffnungen begrenzenden Rändern anliegt, die vollständig in einer gedachten Ebene liegen. Die Öffnungen werden von den Rändern begrenzt. Bevorzugt umgreifen die Ränder jede der Öffnungen jeweils durchgehend, sodass die Öffnungen randgeschlossen vorliegen. Die Ränder sind vorzugsweise freie Enden von Stegen, zwischen welchen die Kanäle beziehungsweise die Ausnehmungen der Kanäle ausgebildet sind. Die Ränder liegen vollständig in der gedachten Ebene. Hierunter ist zu verstehen, dass die Ränder durchgehend plan sind und miteinander fluchten. Insbesondere bilden die Ränder Dichtflächen, an welchen der Abschlussdeckel zum Abdecken beziehungsweise Verschließen der Öffnungen fluiddicht anliegt.

Beispielsweise sind zwischen dem Abschlussdeckel und den Rändern Dichtungen angeordnet, welche jeweils eine der Öffnungen durchgehend umgreifen. Beispielsweise sind die Dichtungen an dem Abschlussdeckel befestigt und/oder einstückig mit diesem ausgebildet. Alternativ können die Dichtungen auch an dem Grundkörper befestigt sein. Die Anordnung der Ränder in der gedachten Ebene hat den Vorteil, dass mittels des Abschlussdeckels ein im wesentlichen gleichzeitiges Abdecken beziehungsweise Verschließen der Öffnungen erfolgt und zudem die Herstellung des Abschlussdeckels und/oder die Anordnung der Dichtungen auf einfache Art und Weise bewerkstelligt werden kann.

Eine Weiterbildung der Erfindung sieht vor, dass der Abschlussdeckel aus einem Material besteht, das von einem Material des Grundkörpers des Maschinengehäuses verschieden ist. Insoweit sind der Abschlussdeckel und das Maschinengehäuse beziehungsweise sein Grundkörper materialuneinheitlich ausgeführt. Als Material des Grundkörpers wird beispielsweise Metall, insbesondere Aluminium oder Stahl oder eine entsprechende Legierung, verwendet. Das Material des Abschlussdeckels ist insbesondere ein Kunststoff, insbesondere ein Thermoplast. Die bereits erwähnte Dichtung kann in diesem Fall einstückig mit dem Abschlussdeckel ausgebildet sein; beispielsweise ist sie an ihn angespritzt. Hierdurch ist eine einfache und kostengünstige Herstellung sichergestellt.

Eine Weiterbildung der Erfindung sieht vor, dass eine durch die entsprechende Öffnung strömungstechnisch an den Druckkanal angeschlossene Druckkammer des Abschlussdeckels über eine in dem Abschlussdeckel ausgebildete Anschlussöffnung an den Schmiermitteltank strömungstechnisch angeschlossen ist, sodass die Schmiermittelpumpe über den in dem Grundkörper ausgebildeten Druckkanal und die Anschlussöffnung strömungstechnisch an den Schmiermitteltank angebunden ist, und/oder dass eine durch die entsprechende Öffnung strömungstechnisch an den Saugkanal und/oder den weiteren Saugkanal angeschlossene Saugkammer des Abschlussdeckels über eine in dem Abschlussdeckel ausgebildete Durchgangsöffnung an den Schmiermitteltank strömungstechnisch angeschlossen ist, sodass die Schmiermittelpumpe über den in dem Grundkörper ausgebildeten Saugkanal und die Durchgangsöffnung strömungstechnisch an den Schmiermittelauslass angebunden ist.

In dem Abschlussdeckel ist also beispielsweise die Druckkammer ausgebildet und liegt in diesem als in Richtung des Grundkörpers offene Ausnehmung vor. Die Druckkammer beziehungsweise eine dem Maschinengehäuse zugewandte Öffnung der Druckkammer fluchtet mit dem Druckkanal beziehungsweise der Öffnung Druckkanals, sodass der Druckkanal strömungstechnisch an die Druckkammer angebunden ist. Die Druckkammer ist einerseits an den Druckkanal und andererseits an den Schmiermitteltank strömungstechnisch angeschlossen. Anders ausgedrückt ist der Druckkanal über die Druckkammer strömungstechnisch an den Schmiermitteltank angeschlossen. Hierzu ist in dem Abschlussdeckel die Anschlussöffnung ausgebildet. Insgesamt ergibt sich hieraus eine Ausgestaltung der Antriebseinrichtung, bei welcher die Schmiermittelpumpe über den Druckkanal und die Anschlussöffnung - in eben dieser Reihenfolge - strömungstechnisch an den Schmiermitteltank angeschlossen ist. Hierdurch sind eine konstruktiv einfache Ausgestaltung der Antriebseinrichtung sowie eine flexible Anordnung des Schmiermitteltanks umgesetzt.

Zusätzlich oder alternativ zu der Druckkammer liegt die Saugkammer in dem Abschlussdeckel vor. Für die Saugkammer gelten die Ausführungen für die Druckkammer analog. Auch sie liegt als Vertiefung in dem Abschlussdeckel vor, welcher auf seiner dem Grundkörper des Maschinengehäuses zugewandten Seite eine Öffnung aufweist und entsprechend offen ist. Die Saugkammer beziehungsweise die Öffnung fluchtet mit dem Saugkanal beziehungsweise dem weiteren Saugkanal und der entsprechend der Öffnung des Saugkanals beziehungsweise des weiteren Saugkanal. Folglich ist die Saugkammer strömungstechnisch an den Saugkanal beziehungsweise den weiteren Saugkanal angebunden.

Auf ihrer dem Saugkanal beziehungsweise dem weiteren Saugkanal abgewandten Seite ist die Saugkammer strömungstechnisch an den Schmiermitteltank angeschlossen, nämlich über die Durchgangsöffnung, welche in dem Abschlussdeckel ausgebildet ist. Die Antriebseinrichtung ist hierbei derart ausgestaltet, dass die Schmiermittelpumpe über den Saugkanal und die Durchgangsöffnung - wiederum in der angegebenen Reihenfolge - strömungstechnisch an den Schmiermittelauslass angeschlossen ist. Erneut ermöglicht dies eine konstruktiv einfache und gleichzeitig flexible Ausgestaltung.

Eine Weiterbildung der Erfindung sieht vor, dass der Abschlussdeckel in einem Luftraum angeordnet ist, in welchen zumindest eine Maschinenwelle der Antriebseinrichtung hineinragt und/oder der einerseits von einer Wand des Grundkörpers und andererseits von einem an dem Grundkörper befestigten Maschinengehäusedeckel begrenzt ist. Der Luftraum wird zumindest bereichsweise von dem Maschinengehäuse eingefasst. Besonders bevorzugt ist der Luftraum gegenüber einer Außenumgebung fluiddicht abgeschlossen. Vorzugsweise ist hierzu der Maschinengehäusedeckel fluiddicht an dem Grundkörper befestigt, sodass der Luftraum einerseits von dem Grundkörper beziehungsweise dessen Wand und andererseits von der Maschinengehäusedeckel begrenzt ist, insbesondere in axialer Richtung der Maschinenwelle.

Zusätzlich oder alternativ liegt in dem Luftraum zumindest bereichsweise die Maschinenwelle der Antriebseinrichtung vor. Die Maschinenwelle ist beispielsweise Bestandteil des Antriebsaggregats, insbesondere stellt sie eine Antriebswelle des Antriebsaggregats dar. Beispielsweise weist die Maschinenwelle in dem Luftraum eine Verzahnung auf, über welche sie mit wenigstens einer anderen Welle der Antriebseinrichtung antriebstechnisch gekoppelt ist. Beispielsweise dient die Verzahnung dem Festsetzen eines Zahnrads bezüglich der Maschinenwelle in Umfangsrichtung. Hierzu verfügt das Zahnrad über eine Gegenverzahnung, welche formschlüssig mit der Verzahnung der Maschinenwelle zusammenwirkt. Die Verwendung des AbschlussdeckelAbschlussdeckels ermöglicht eine effektive Nutzung des Luftraums und entsprechend eine kompakte Ausgestaltung des Maschinengehäuses.

Eine Weiterbildung der Erfindung sieht vor, dass die Anschlussöffnung über eine an dem Abschlussdeckel befestigte Schmiermittelleitung an den Schmiermitteltank strömungstechnisch angeschlossen ist, wobei die Schmiermittelleitung eine den Luftraum begrenzende Trennwand durchgreift und/oder sich teilweise durch den Schmiermitteltank hindurcherstreckt. Die Schmiermittelleitung liegt beispielsweise in Form eines starren Rohrs vor. Sie ist an dem Abschlussdeckel befestigt, nämlich derart, dass sie strömungstechnisch mit der Anschlussöffnung und über diese mit der Druckkammer des Abschlussdeckels verbunden ist. Schlussendlich steht die Schmiermittelleitung also in Strömungsverbindung mit dem Druckkanal.

Die Schmiermittelleitung erstreckt sich bis hin zu dem Schmiermitteltank. Beispielsweise endet sie unmittelbar an dem Schmiermitteltank. Bevorzugt ist es jedoch vorgesehen, dass sie sich teilweise durch den Schmiermitteltank hindurcherstreckt. Beispielsweise durchgreift sie einen Innenraum des Schmiermitteltanks zu mindestens 50 %, mindestens 75 % oder mehr. Insbesondere ist die Schmiermittelleitung derart in dem Schmiermitteltank angeordnet, dass ihre der Schmiermittelpumpe abgewandte Mündungsöffnung stets oberhalb eines während eines normalen Betriebs der Antriebseinrichtung auftretenden Schmiermittelpegels angeordnet ist. Entsprechend kann durch die Schmiermittelleitung besonders effektiv das Schmiermittel in den Schmiermitteltank eingebracht werden.

Es kann vorgesehen sein, dass die von dem Abschlussdeckel ausgehende Schmiermittelleitung zunächst die den Luftraum begrenzende Trennwand durchgreift, bevor sie den Schmiermitteltank erreicht. Das bedeutet, dass der Schmiermitteltank außerhalb des Luftraums angeordnet, insbesondere von diesem separiert ist. Beispielsweise ist der Schmiermitteltank von dem Maschinengehäuse selbst ausgebildet, sodass also Wände des Maschinengehäuses einen Schmiermittel aufnehmenden Speicherraum des Schmiermitteltanks vollständig umgreifen und einschließen. Über die Schmiermittelleitung ist insoweit der Schmiermitteltank auf besonders einfache Art und Weise an die Schmiermittelpumpe anschließbar. Insbesondere ist es nicht notwendig, entsprechende Kanäle in dem Grundkörper des Maschinengehäuses selbst auszugestalten.

Eine Weiterbildung der Erfindung sieht vor, dass der Abschlussdeckel eine in dem Maschinengehäuse ausgebildete Aufnahmeöffnung zumindest bereichsweise umgreift, wobei in der Aufnahmeöffnung die Maschinenwelle angeordnet und/oder gelagert ist. Die Aufnahmeöffnung ist beispielsweise in der zuvor erwähnten, den Luftraum begrenzenden Trennwand ausgebildet. In der Aufnahmeöffnung ist bevorzugt die Maschinenwelle angeordnet beziehungsweise gelagert. Der Abschlussdeckel ist an die Aufnahmeöffnung formangepasst und umgreift diesen zumindest bereichsweise. Das bedeutet, dass zumindest einige der Kanäle beziehungsweise deren Öffnungen einen identischen Abstand zu der Aufnahmeöffnung aufweisen, jedoch in unterschiedlichen Winkelstellungen zu dieser vorliegen. Um dennoch ein Abdecken beziehungsweise Verschließen der Öffnungen mittels des Abschlussdeckels ohne weiteres zu ermöglichen, ist der Abschlussdeckel an die Aufnahmeöffnung angepasst. Hierdurch wird eine äußerst effiziente Raumnutzung erzielt.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung für ein Kraftfahrzeug, mit einem Maschinengehäuse, in dem ein Schmiermittelverbraucher, ein Schmiermitteltank und eine Schmiermittelpumpe angeordnet sind,
- Figur 2: eine weitere schematische Darstellung der Antriebseinrichtung,
- Figur 3: eine schematische Detaildarstellung eines Bereichs der Antriebseinrichtung, sowie
- Figur 4: einen Abschlussdeckel des Maschinengehäuses sowie eine von diesem ausgehende Schmiermittelleitung.

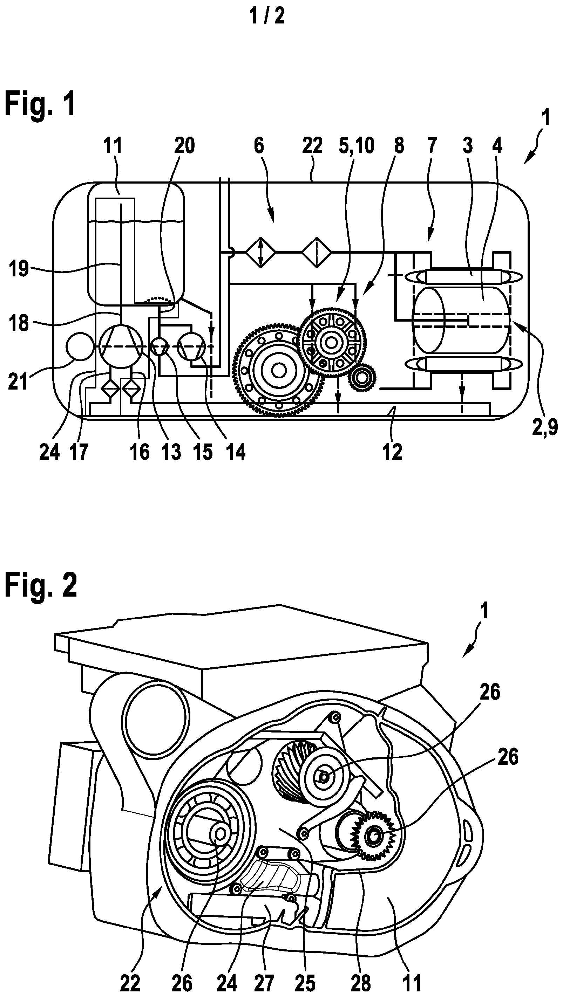

Die Figur 1 zeigt eine schematische Darstellung einer Antriebseinrichtung 1 für ein nicht näher dargestelltes Kraftfahrzeug. Die Antriebseinrichtung 1 weist ein Antriebsaggregat 2 auf, das in dem hier dargestellten Ausführungsbeispiele als elektrisch Maschine vorliegt und entsprechend einen Stator 3 sowie einen Rotor 4 aufweist. Weiterhin verfügt die Antriebseinrichtung 1 über ein Getriebe 5, das in dem dargestellten Ausführungsbeispiel über mehrere Getriebestufen verfügt. Vorzugsweise ist das Antriebsaggregat 2 über das Getriebe 5 mit einer Ausgangswelle der Antriebseinrichtung 1 antriebstechnisch verbunden, wobei mit der Ausgangswelle wiederum zumindest ein Rad des Kraftfahrzeugs antriebstechnisch koppelbar ist. Sowohl das Antriebsaggregat 2 als auch das Getriebe 5 sind in einem Maschinengehäuse 6 der Antriebseinrichtung 1 angeordnet.

Während eines Betriebs der Antriebseinrichtung 1 wird dem Antriebsaggregat 2 und dem Getriebe 5 zumindest zeitweise Schmiermittel zur Schmierung und/oder zur Temperierung zugeführt. Hierzu weisen das Antriebsaggregat 2 und das Getriebe 5 Schmiermittelzuführeinrichtungen 7 beziehungsweise 8 auf. Das Antriebsaggregat 2 und das Getriebe 5 stellen insoweit einen Schmiermittelverbraucher 9 und einen Schmiermittelverbraucher 10 dar. Den Schmiermittelverbrauchern 9 und 10 wird zumindest zeitweise Schmiermittel aus einem Schmiermitteltank 11 zugeführt. Das den Schmiermittelverbrauchern 9 und 10 zugeführte Schmiermittel tritt nach dem Schmieren und/oder Temperieren in einen Schmiermittelsumpf 12 aus und wird aus diesem mittels einer Schmiermittelpumpe 13 erneut in Richtung des Schmiermitteltanks 11 gefördert. Im Rahmen des hier beschriebenen Ausführungsbeispiels ist es vorgesehen, das dem Schmiermittelverbrauchern 9 das Schmiermittel mittels einer ersten weiteren Schmiermittelpumpe 14 und dem weiteren Schmiermittelverbraucher 10 mittels einer zweiten weiteren Schmiermittelpumpe 15 zugeführt wird.

Die Schmiermittelpumpe 13 ist über einen Saugkanal 16 und einen weiteren Saugkanal 17 an den Schmiermittelsumpf 12 und mithin an die Schmiermittelverbraucher 9 und 10 strömungstechnisch angeschlossen, nämlich saugseitig. Druckseitig ist die Schmiermittelpumpe 13 über einen Druckkanal 18 und eine Schmiermittelleitung 19 an den Schmiermitteltank 11 angebunden. Schließlich ist ein Vorlaufkanal 20 vorgesehen, über welche der Schmiermitteltank 11 an die Schmiermittelverbraucher 9 und 10 angebunden ist, nämlich über die weiteren Schmiermittelpumpen 14 und 15. In dem hier dargestellten Ausgangsbeispiel ist es vorgesehen, die Schmiermittelpumpe 13 sowie die weiteren Schmiermittelpumpen 14 und 15 mittels eines gemeinsamen Antriebs 21 anzutreiben, der insoweit auch als Schmiermittelpumpenantrieb oder Ölpumpenantrieb bezeichnet werden kann. Der Antrieb 21 verfügt beispielsweise über einen Elektromotor oder ist als solcher ausgestaltet.

Es ist vorgesehen, dass der Saugkanal 16, der weitere Saugkanal 17, der Druckkanal 18 und der Vorlaufkanal 20 jeweils in einem Grundkörper 22 des Maschinengehäuses 6, der auch als Getriebegehäuse bezeichnet werden kann, ausgebildet sind, nämlich jeweils unter Ausbildung einer hier nicht erkennbaren Öffnung 23. Die Öffnungen 23 der genannten Kanäle 16, 17, 18 und 20 sind mittels eines an dem Grundkörper 22 befestigten Abschlussdeckels 24, welcher hier lediglich angedeutet ist, strömungstechnisch separat voneinander abgedeckt beziehungsweise verschlossen.

Die Figur 2 zeigt nochmals eine schematische Darstellung der Antriebseinrichtung 1. Erkennbar ist insbesondere der Grundkörper 22, der einen Luftraum 25 mit einschließt, nämlich gemeinsam mit einem hier nicht dargestellten Maschinengehäusedeckel, der an dem Grundkörper 22 befestigt ist. In den Luftraum 25 greift wenigstens eine Maschinenwelle 26 ein, in dem dargestellten Ausführungsbeispiel mehrere Maschinenwellen 26. Erkennbar ist der an dem Grundkörper 22 befestigte Abschlussdeckel 24.

An dem Abschlussdeckel 24 ist wiederum ein Saugstutzen 27 angeordnet, welches über den Abschlussdeckel 24 mit dem weiteren Saugkanal 17 strömungstechnisch verbunden ist. Der Saugstutzen 27 ragt in Richtung eines Bodens des Maschinengehäuses 6 in dem Luftraum 25, sodass über den Saugstutzen 27 in dem Luftraum 25 vorliegendes Schmiermittel über den weiteren Saugkanal 17, die Schmiermittelpumpe 13, den Druckkanal 18 sowie die Schmiermittelleitung 19 in den Schmiermitteltank 11 gefördert werden kann. Der Schmiermitteltank 11 ist separat von dem Luftraum 25 in dem Maschinengehäuse 6 ausgebildet und in dem hier dargestellten Ausführungsbeispiel mittels der Trennwand 28 von ihm separiert.

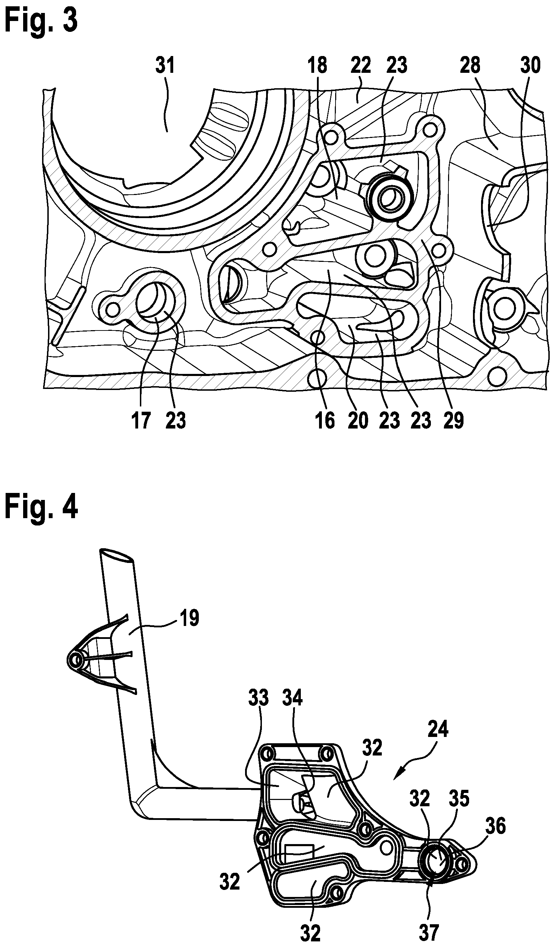

Die Figur 3 zeigt eine schematische Detaildarstellung eines Bereichs des Maschinengehäuses 6 beziehungsweise des Grundkörpers 22. Erkennbar sind die Saugkanäle 16 und 17, der Druckkanal 18, der Vorlaufkanal 20 sowie deren Öffnungen 23. Es wird deutlich, dass die Öffnungen 23 von Rändern 29 begrenzt sind, welche durchgehend in einer gemeinsamen gedachten Ebene liegen. An den Rändern 29 liegt nach seiner Befestigung an dem Grundkörper 22 der Abschlussdeckel 24 dichtend an, sodass die Öffnungen 23 jeweils verschlossen sind. Die Ränder bilden beispielsweise einen Bestandteil eines Flanschs, an welchem der Abschlussdeckel 24 angeordnet ist.

Erkennbar ist ebenfalls eine die Trennwand 28 durchgreifende Durchtrittsausnehmung 30 sowie eine Aufnahmeöffnung 31. Nach der Montage des AbschlussdeckelAbschlussdeckels 24 durchgreift die Schmiermittelleitung 19 die Durchtrittsausnehmung 30, um den Druckkanal 18 strömungstechnisch an den Schmiermitteltank 11 anzubinden. In der Aufnahmeöffnung 31 ist die Maschinenwelle 26 beziehungsweise eine der Maschinenwellen 26 angeordnet beziehungsweise gelagert.

Die Figur 4 zeigt eine schematische Darstellung des Abschlussdeckels 24 sowie der Schmiermittelleitung 19. Es ist erkennbar, dass der Abschlussdeckel 24 mehrere Ausnehmungen 32 aufweist, welche jeweils mit einem der Kanäle 16, 17, 18 und 20 in Überdeckung stehen und durch die jeweilige Öffnung 23 mit ihm in Strömungsverbindung stehen. Die an den Druckkanal 18 strömungstechnisch angebundene Ausnehmung 32 kann auch als Druckkammer 33 bezeichnet werden. Sie ist über eine Anschlussöffnung 34 strömungstechnisch an die Schmiermittelleitung 19 angebunden.

Hierbei mündet die Schmiermittelleitung 19 über die Anschlussöffnung 34 in die Druckkammer 33 ein. Analog hierzu kann die an den weiteren Saugkanal 17 angebundene Ausnehmung 32 als Saugkammer 35 bezeichnet werden. Die Saugkammer 35 ist strömungstechnisch an den Saugstutzen 27 angebunden. Eine Wand 36 des Saugstutzens ist für das dargestellte Ausführungsbeispiel durch einen in dem Abschlussdeckel 24 ausgebildeten Durchbruch 37 erkennbar.

Die beschriebene Ausgestaltung der Antriebseinrichtung 1 ermöglicht eine besonders einfache und kostengünstige Herstellung der beschriebenen Kanäle 16, 17, 18 und 20. Vorzugsweise werden hierbei während eines Gießens des Maschinengehäuses 6 Ausnehmungen in dem Grundkörper 22 ausgebildet, welche die Kanäle 16, 17, 20 und 22 zumindest bereichsweise bilden. Diese Ausnehmungen beziehungsweise die korrespondierenden Öffnungen 23 werden nachfolgend mithilfe des Abschlussdeckels 24 abgedeckt beziehungsweise verschlossen. Der Abschlussdeckel 24 dient insoweit dem gleichzeitigen und strömungstechnisch separaten Abdecken beziehungsweise Verschließen der Öffnungen 23.

### BEZUGSZEICHENLISTE:

- 1: Antriebseinrichtung
- 2: Antriebsaggregat
- 3: Stator
- 4: Rotor
- 5: Getriebe
- 6: Maschinengehäuse
- 7: Schmiermittelzuführeinrichtung
- 8: Schmiermittelzuführeinrichtung
- 9: Schmiermittelverbraucher
- 10: Schmiermittelverbraucher
- 11: Schmiermitteltank
- 12: Schmiermittelsumpf
- 13: Schmiermittelpumpe
- 14: erste weitere Schmiermittelpumpe
- 15: zweite weitere Schmiermittelpumpe
- 16: Saugkanal
- 17: weiterer Saugkanal
- 18: Druckkanal
- 19: Schmiermittelleitung
- 20: Vorlaufkanal
- 21: Antrieb
- 22: Getriebegehäuse
- 23: Öffnung
- 24: Abschlussdeckel
- 25: Luftraum
- 26: Maschinenwelle
- 27: Saugstutzen
- 28: Trennwand
- 29: Rand
- 30: Durchtrittsausnehmung
- 31: Aufnahmeöffnung
- 32: Ausnehmung
- 33: Druckkammer
- 34: Anschlussöffnung
- 35: Saugkammer
- 36: Wand
- 37: Durchbruch

## Patentansprüche

1. Antriebseinrichtung (1) für ein Kraftfahrzeug, mit einem Maschinengehäuse (6), in dem ein Schmiermittelverbraucher (9), ein Schmiermitteltank (11) und eine Schmiermittelpumpe (13) angeordnet sind, wobei die Schmiermittelpumpe (13) saugseitig über einen Saugkanal (16) an den Schmiermittelverbraucher (9) und der Schmiermitteltank (11) über einen Vorlaufkanal (20) an den Schmiermittelverbraucher (9) strömungstechnisch angeschlossen ist, **dadurch gekennzeichnet, dass** die Schmiermittelpumpe (13) druckseitig über einen Druckkanal (18) an den Schmiermitteltank (11) strömungstechnisch angeschlossen ist, wobei der Saugkanal (16), der Druckkanal (18) und der Vorlaufkanal (20) jeweils unter Ausbildung einer Öffnung (23) offen in einem Grundkörper (22) des Maschinengehäuses (6) ausgebildet und die Öffnungen (23) mittels eines an dem Grundkörper (22) befestigten Abschlussdeckels (24) strömungstechnisch separat voneinander abgedeckt sind, wobei die Schmiermittelpumpe (13) saugseitig parallel zu dem Saugkanal (16) an einen weiteren Saugkanal (17) und über diesen strömungstechnisch an den Schmiermittelverbraucher (9) und/oder einen weiteren Schmiermittelverbraucher (10) angeschlossen ist.

2. Antriebseinrichtung nach Anspruch 1, **dadurch gekennzeichnet, dass** der Schmiermittelverbraucher (9) und/oder der weitere Schmiermittelverbraucher (10) jeweils als eine der nachfolgenden Einrichtungen vorliegen: Antriebsaggregat (2) und Getriebe (5).

3. Antriebseinrichtung nach einem der vorhergehenden Ansprüche, **dadurch gekennzeichnet, dass** der Saugkanal (16) über einen Schmiermittelsumpf (12) an den Schmiermittelverbraucher(9) und/oder der weitere Saugkanal (17) über den Schmiermittelsumpf (12) an den weiteren Schmiermittelverbraucher (10) strömungstechnisch angeschlossen ist.

4. Antriebseinrichtung nach einem der vorhergehenden Ansprüche, **dadurch gekennzeichnet, dass** der Abschlussdeckel (24) zum Abdecken der Öffnungen (23) an die Öffnungen (23) begrenzenden Rändern (29) anliegt, die vollständig in einer gedachten Ebene liegen.

5. Antriebseinrichtung nach einem der vorhergehenden Ansprüche, **dadurch gekennzeichnet, dass** der Abschlussdeckel (24) aus einem Material besteht, das von einem Material des Grundkörpers (22) des Maschinengehäuses (6) verschieden ist.

6. Antriebseinrichtung nach einem der vorhergehenden Ansprüche, **dadurch gekennzeichnet, dass** eine durch die entsprechende Öffnung (23) strömungstechnisch an den Druckkanal (18) angeschlossene Druckkammer (33) des Abschlussdeckels (24) über eine in dem Abschlussdeckel (24) ausgebildete Anschlussöffnung (34) an den Schmiermitteltank (11) strömungstechnisch angeschlossen ist, sodass die Schmiermittelpumpe (13) über den in dem Grundkörper (22) ausgebildeten Druckkanal (18) und die Anschlussöffnung (34) strömungstechnisch an den Schmiermitteltank (11) angebunden ist, und/oder dass eine durch die entsprechende Öffnung (23) strömungstechnisch an den Saugkanal (16) und/oder den weiteren Saugkanal (17) angeschlossene Saugkammer (35) des Abschlussdeckels (24) über eine in dem Abschlussdeckel (24) ausgebildete Durchgangsöffnung an den Schmiermitteltank (11) strömungstechnisch angeschlossen ist, sodass die Schmiermittelpumpe (13) über den in dem Grundkörper (22) ausgebildeten Saugkanal (16) und die Durchgangsöffnung strömungstechnisch an den Schmiermittelverbraucher (9) angebunden ist.

7. Antriebseinrichtung nach einem der vorhergehenden Ansprüche, **dadurch gekennzeichnet, dass** der Abschlussdeckel (24) in einem Luftraum (25) angeordnet ist, in welchen zumindest eine Maschinenwelle (26) der Antriebseinrichtung (1) hineinragt und/oder der einerseits von einer Wand des Grundkörpers (22) und andererseits von einem an dem Grundkörper (22) befestigten Maschinengehäusedeckel begrenzt ist.

8. Antriebseinrichtung nach Anspruch 6 und 7, **dadurch gekennzeichnet, dass** die Anschlussöffnung (34) über eine an dem Abschlussdeckel (24) befestigte Schmiermittelleitung (19) an den Schmiermitteltank (11) strömungstechnisch angeschlossen ist, wobei die Schmiermittelleitung (19) eine den Luftraum (25) begrenzende Trennwand (28) durchgreift und/oder sich teilweise durch den Schmiermitteltank (11) hindurcherstreckt.

9. Antriebseinrichtung nach Anspruch 7 oder 8, **dadurch gekennzeichnet, dass** der Abschlussdeckel (24) eine in dem Maschinengehäuse (6) ausgebildete Aufnahmeöffnung (31) zumindest bereichsweise umgreift, wobei in der Aufnahmeöffnung (31) die Maschinenwelle (26) angeordnet und/oder gelagert ist.

## Claims

1. Drive apparatus (1) for a motor vehicle, with a machine housing (6) in which a lubricant consumer (9), a lubricant tank (11) and a lubricant pump (13) are arranged, wherein the lubricant pump (13) is fluidically connected on the suction side via a suction channel (16) to the lubricant consumer (9) and the lubricant tank (11) is fluidically connected via a flow channel (20) to the lubricant consumer (9), **characterized in that** the lubricant pump (13) is fluidically connected on the pressure side via a pressure channel (18) to the lubricant tank (11), wherein the suction channel (16), the pressure channel (18) and the flow channel (20) are each open in a base body (22) of the machine housing (6) forming an opening (23), and the openings (23) are fluidically covered separately from one another by means of an end cover (24) secured to the base body (22), wherein the lubricant pump (13) is connected on the suction side parallel to the suction channel (16) to a further suction channel (17) and via the latter fludically to the lubricant consumer (9) and/or a further lubricant consumer (10).

2. Drive apparatus according to claim 1, **characterized in that** the lubricant consumer (9) and/or the further lubricant consumer (10) are respectively present as one of the following apparatuses: drive unit (2) and transmission (5).

3. Drive apparatus according to any one of the preceding claims, **characterized in that** the suction channel (16) is fluidically connected to the lubricant consumer (9) via a lubricant sump (12) and/or the further suction channel (17) is fluidically connected to the further lubricant consumer (10) via the lubricant sump (12).

4. Drive apparatus according to any one of the preceding claims, **characterized in that** the end cover (24) for covering the openings (23) bears against edges (29) delimiting the openings (23), which edges lie completely in an imaginary plane.

5. Drive apparatus according to any one of the preceding claims, **characterized in that** the end cover (24) consists of a material which is different from a material of the base body (22) of the machine housing (6).

6. Drive apparatus according to any one of the preceding claims, **characterized in thata** pressure chamber (33) of the end cover (24), which is fluidically connected to the pressure channel (18) through the corresponding opening (23), is fluidically connected to the lubricant tank (11) via a connection opening (34) formed in the end cover (24), so that the lubricant pump (13) is fluidically attached to the lubricant tank (11) via the pressure channel (18) formed in the base body (22) and the connection opening (34), and/or in that a suction chamber (35) of the end cover (24), which is fluidically connected to the suction channel (16) and/or the further suction channel (17) through the corresponding opening (23), is fluidically connected to the lubricant tank (11) via a through-opening formed in the end cover (24), so that the lubricant pump (13) is fluidically attached to the lubricant consumer (9) via the suction channel (16) formed in the base body (22) and the through-opening.

7. Drive apparatus according to any one of the preceding claims, **characterized in that** the end cover (24) is arranged in an air space (25) into which at least one machine shaft (26) of the drive apparatus (1) projects and/or which is delimited on the one hand by a wall of the base body (22) and on the other hand by a machine housing cover secured to the base body (22).

8. Drive apparatus according to claim 6 and 7, **characterized in that** the connection opening (34) is fluidically connected to the lubricant tank (11) via a lubricant line (19) secured to the end cover (24), wherein the lubricant line (19) runs through a partition wall (28) delimiting the air space (25) and/or extends partially through the lubricant tank (11).

9. Drive apparatus according to claim 7 or 8, **characterized in that** the end cover (24) at least partially surrounds a receiving opening (31) formed in the machine housing (6), wherein the machine shaft (26) is arranged and/or mounted in the receiving opening (31).

## Revendications

1. Dispositif d'entraînement (1) pour un véhicule automobile, avec un carter de machine (6) dans lequel un consommateur de lubrifiant (9), un réservoir de lubrifiant (11) et une pompe à lubrifiant (13) sont agencés, dans lequel la pompe à lubrifiant (13) est raccordée fluidiquement côté aspiration par le biais d'un canal d'aspiration (16) au consommateur de lubrifiant (9) et le réservoir de lubrifiant (11) est raccordé fluidiquement par le biais d'un canal d'arrivée (20) au consommateur de lubrifiant (9), **caractérisé en ce que** la pompe à lubrifiant (13) est raccordée fluidiquement côté pression par le biais d'un canal de pression (18) au réservoir de lubrifiant (11), dans lequel le canal d'aspiration (16), le canal de pression (18) et le canal d'arrivée (20) sont formés respectivement en formant une ouverture (23) ouverte dans un corps de base (22) du carter de machine (6), et les ouvertures (23) sont recouvertes fluidiquement en étant séparées les unes des autres au moyen d'un couvercle de fermeture (24) fixé au corps de base (22), dans lequel la pompe à lubrifiant (13) est raccordée côté aspiration parallèlement au canal d'aspiration (16) à un autre canal d'aspiration (17) et par le biais de celui-ci fluidiquement au consommateur de lubrifiant (9) et/ou à un autre consommateur de lubrifiant (10).

2. Dispositif d'entraînement selon la revendication 1, **caractérisé en ce que** le consommateur de lubrifiant (9) et/ou l'autre consommateur de lubrifiant (10) se présente respectivement comme l'un des équipements suivants : agrégat d'entraînement (2) et transmission (5).

3. Dispositif d'entraînement selon l'une quelconque des revendications précédentes, **caractérisé en ce que** le canal d'aspiration (16) est raccordé fluidiquement par le biais d'un réservoir de lubrifiant (12) au consommateur de lubrifiant (9) et/ou l'autre canal d'aspiration (17) est raccordé fluidiquement par le biais du réservoir de lubrifiant (12) à l'autre consommateur de lubrifiant (10).

4. Dispositif d'entraînement selon l'une quelconque des revendications précédentes, **caractérisé en ce que** le couvercle de fermeture (24) repose contre des bords (29) limitant les ouvertures (23), qui se situent entièrement dans un plan imaginaire, pour le recouvrement des ouvertures (23).

5. Dispositif d'entraînement selon l'une quelconque des revendications précédentes, **caractérisé en ce que** le couvercle de fermeture (24) se compose d'un matériau qui est différent d'un matériau du corps de base (22) du carter de machine (6).

6. Dispositif d'entraînement selon l'une quelconque des revendications précédentes, **caractérisé en ce qu'**une chambre de pression (33) raccordée fluidiquement par l'ouverture (23) correspondante au canal de pression (18) du couvercle de fermeture (24) est raccordée fluidiquement par le biais d'une ouverture de raccordement (34) formée dans le couvercle de fermeture (24) au réservoir de lubrifiant (11), de sorte que la pompe à lubrifiant (13) soit reliée fluidiquement par le biais du canal de pression (18) formé dans le corps de base (22) et de l'ouverture de raccordement (34) au réservoir de lubrifiant (11), et/ou **en ce qu'**une chambre d'aspiration (35) raccordée fluidiquement par l'ouverture (23) correspondante au canal d'aspiration (16) et/ou à l'autre canal d'aspiration (17) du couvercle de fermeture (24) est raccordée fluidiquement par le biais d'une ouverture traversante formée dans le couvercle de fermeture (24) au réservoir de lubrifiant (11), de sorte que la pompe à lubrifiant (13) soit reliée fluidiquement par le bais du canal d'aspiration (16) formé dans le corps de base (22) et de l'ouverture traversante au consommateur de lubrifiant (9).

7. Dispositif d'entraînement selon l'une quelconque des revendications précédentes, **caractérisé en ce que** le couvercle de fermeture (24) est agencé dans un espace d'air (25) dans lequel pénètre au moins un arbre de machine (26) du dispositif d'entraînement (1) et/ou qui est délimité d'une part par une paroi du corps de base (22) et d'autre part par un couvercle de carter de machine fixé au corps de base (22).

8. Dispositif d'entraînement selon les revendications 6 et 7, **caractérisé en ce que** l'ouverture de raccordement (34) est raccordée fluidiquement par le biais d'une conduite de lubrifiant (19) fixée au couvercle de fermeture (24) au réservoir de lubrifiant (11), dans lequel la conduite de lubrifiant (19) traverse une paroi de séparation (28) délimitant l'espace d'air (25) et/ou s'étend partiellement à travers le réservoir de lubrifiant (11).

9. Dispositif d'entraînement selon la revendication 7 ou 8, **caractérisé en ce que** le couvercle de fermeture (24) entoure au moins par endroits une ouverture de réception (31) formée dans le carter de machine (6), dans lequel l'arbre de machine (26) est agencé et/ou logé dans l'ouverture de réception (31).
